# EUROPEAN PATENT APPLICATION

(11) **EP 4 557 399 A1**
(43) Date of publication of application: **21.05.2025**
(21) Application number: 23215482.3
(22) Date of filing: 11.12.2023
(51) Int. Cl.: H01M 4/505, H01M 4/525, H01M 10/0525, H01M 10/0565

(54) **POSITIVE ELECTRODE MATERIAL, PREPARATION METHOD THEREOF, AND APPLICATIONS**

(30) Priority: 14.11.2023 CN 202311519051
(71) Applicant: AESC Japan Ltd., Yokohama-Shi, Kanagawa 220-0012 (JP)
(72) Inventor: YU, Le, Pudong New Area Shanghai, 201315 (CN); LI, Qian, Pudong New Area Shanghai, 201315 (CN); LYU, Wenbin, Pudong New Area Shanghai, 201315 (CN)
(74) Representative: Becker, Eberhard

(57) **Abstract**

The disclosure proposes a positive electrode material, a preparation method thereof, and applications. The positive electrode material at least includes a positive electrode active material including LiNi_{0.5}Mn_{1.5}O_{4;} and a coating layer coated on the positive electrode active material, wherein the coating layer includes a halide solid electrolyte, and the chemical formula of the halide solid electrolyte is Li₂₊ₐZr₁₋ₐFeₐCl_{6-x-y}BrₓI_{y}, in which 0 < a≤0.5; x=0 to 6, y=0 to 6, x+y≤6. The disclosure proposes the positive electrode material, the preparation method thereof, and the applications, which can improve the rate performance and the cycle performance of a lithium-ion battery.

## Description

### BACKGROUND

### Technical Field

The disclosure relates to the technical field of a lithium-ion battery, and in particular to a positive electrode material, a preparation method thereof, and applications.

### Description of Related Art

With the development of secondary batteries, mainly lithium-ion batteries, lithium-ion batteries have been widely used in portable electronic products and electric vehicles. However, recent frequent safety accidents in new energy vehicles are due to the use of flammable organic solvents as electrolytes in conventional lithium-ion batteries, which pose serious safety risks. This problem cannot be completely solved through conventional improvement methods. In comparison, all-solid-state lithium-ion batteries using inorganic solid electrolytes are safer. Among existing inorganic solid electrolytes, sulfide solid electrolytes have good application prospects due to the high lithium ion conductivity, and the low interfacial resistance and Young's modulus. However, the interfacial instability between the high-voltage positive electrode material and the sulfide solid electrolyte leads to a poor cycle performance of the positive electrode, especially for high-voltage lithium nickel manganate materials, whose problem can be avoided by modifying the surface of the high-voltage lithium nickel manganate materials with a stable oxide coating layer. However, generally, specialized equipment and high costs are required, thus the application scenarios are limited.

### SUMMARY

The disclosure proposes a positive electrode material, a preparation method thereof, and applications, through the positive electrode material, the preparation method, and the applications according to the disclosure, cost can be significantly reduced, the side reaction between the positive electrode material and the sulfide electrolyte at a high voltage can be effectively suppressed, and the interfacial stability between the electrode and the solid electrolyte can be improved, thereby improving the rate performance and the cycle performance of a battery.

In order to solve the above technical problems, the disclosure is implemented through the following technical solutions.

The disclosure proposes a positive electrode material, which at least includes the following steps:
a positive electrode active material including LiNi_{0.5}Mn_{1.5}O₄, and
a coating layer coated on the positive electrode active material, wherein the coating layer includes a halide solid electrolyte, and the chemical formula of the halide solid electrolyte is Li₂₊aZr₁₋ₐFeₐCl_{6-x-y}BrₓI_{y}, in which 0 < a≤0.5; x=0 to 6, y=0 to 6, x+y≤6.

In an embodiment of the disclosure, a molar ratio of iron atoms on a surface of the positive electrode material measured by an energy dispersive X-ray spectrometer is 0.2% to 5%.

In an embodiment of the disclosure, the chemical formula of the halide solid electrolyte is Li_{2.3}Zr_{0.7}Fe_{0.3}Cl₆.

In an embodiment of the disclosure, the positive electrode active material is in a secondary spherical form or a single crystal form.

In an embodiment of the disclosure, a median particle diameter D50 of the positive electrode active material in the secondary spherical form is 10 µm to 40 µm.

In an embodiment of the disclosure, a median particle diameter D50 of the positive electrode active material in the single crystal form is 1 µm to 16 µm.

The disclosure also provides a preparation method for the positive electrode material, which at least includes the following steps:
mixing corresponding amounts of compounds containing Li, Zr, and Fe according to the chemical formula of the halide solid electrolyte, grinding, and performing a first sintering to obtain the halide solid electrolyte.
blending the halide solid electrolyte and the positive electrode active material according to a mass ratio and performing a second sintering to obtain the positive electrode material.

In an embodiment of the disclosure, the mass ratio of the halide solid electrolyte and the positive electrode active material is (0.1 to 1.2): (99.9 to 98.8).

In an embodiment of the disclosure, the condition for the blending includes: the mixing speed is 100 rpm to 10000 rpm, and the mixing time is 1 h to 48 h.

In an embodiment of the disclosure, for the first sintering, the temperature is 250 °C to 350 °C, and the sintering time is 3 h to 5 h.

In an embodiment of the disclosure, for the second sintering, the temperature is 200 °C to 500 °C, and the sintering time is 6 h to 18 h.

The disclosure also provides a lithium-ion battery, which includes the positive electrode material or a positive electrode material obtained by the preparation method.

The disclosure also provides an electronic device, which includes the lithium-ion battery.

In summary, the disclosure proposes the positive electrode material, the preparation method thereof, and the applications, which can obtain the halide solid electrolyte with a low cost, a high ionic conductivity, and a high-voltage resistance, and solve the problem of interfacial instability between the high-voltage lithium nickel manganate positive electrode active material and the sulfide solid electrolyte. The lithium ion conductivity of the positive electrode material can be improved while the side reaction between the positive electrode material and the sulfide electrolyte at a high voltage can be effectively suppressed. The halide solid electrolyte has a good compatibility with the high-voltage lithium nickel manganate positive electrode active material, which can effectively improve the ion transmission dynamics, thereby improving the rate performance of the battery. The side reaction between the positive electrode material and the sulfide electrolyte at a high voltage can be effectively suppressed and the interfacial stability between the electrode and the solid electrolyte is improved, thereby improving the stability and the cycle performance of the battery.

### BRIEF DESCRIPTION OF THE DRAWINGS

In order to clearly describe the technical solutions of the embodiments according to the disclosure, the drawings needed to describe the embodiments are briefly introduced below. Notably, the drawings in the following description are merely some embodiments of the disclosure. For persons of ordinary skill in the art, other drawings may be obtained based on the drawings without exerting creative efforts.
FIG. 1 is a flow chart of a preparation method of a positive electrode material according the disclosure.
FIG. 2 is a scanning electron microscope image of the positive electrode material according to Example 2 of the disclosure.
FIG. 3 is an EDS energy spectrum diagram of the positive electrode material according to Example 2 of the disclosure.
FIG. 4 is a scanning electron microscope image of the positive electrode material according to Comparative Example 2 of the disclosure.
FIG. 5 is an EDS energy spectrum diagram of the positive electrode material according to Comparative Example 2 of the disclosure.

### DESCRIPTION OF THE EMBODIMENTS

The following describes the embodiments of the disclosure through specific examples, and persons skilled in the art can easily understand other advantages and effects of the disclosure from the content disclosed in this specification. The disclosure may also be implemented or applied through other different specific embodiments. Various details in this specification can also be modified or changed in various ways based on different viewpoints and applications without departing from the spirit of the disclosure.

It should be understood that the disclosure may be implemented in different forms and should not be limited to the embodiments set forth herein. Rather, the embodiments are provided so that the disclosure is thorough and complete, and that the scope of the disclosure is fully conveyed to persons skilled in the art. Unless otherwise specified, "%" and "parts" shown in the following examples refer to "mass%" and "parts by mass" respectively.

The technical solution of the disclosure will be further described in detail below with reference to several embodiments and drawings. Notably, the described embodiments are merely some of the embodiments of the disclosure, rather than all of the embodiments. Based on the embodiments of the disclosure, all other embodiments obtained by persons of ordinary skill in the art without exerting creative efforts fall within the scope of protection of the disclosure.

The disclosure proposes a positive electrode material, and the positive electrode material includes a positive electrode active material and a coating layer coated on the positive electrode active material, in which the positive electrode active material is a high-voltage positive electrode active material. The high-voltage positive electrode active material is, for example, a lithium nickel manganate positive electrode active material, also including LiNi_{0.5}Mn_{1.5}O₄, etc. The coating layer includes a halide solid electrolyte, and the chemical formula of the halide solid electrolyte is, for example, Li₂₊ₐZr₁₋ₐFeₐCl_{6-x-y}BrₓI_{y}, wherein 0 < a≤0.5; x=0 to 6, y=0 to 6, x+y≤6. In an embodiment of the disclosure, the halide solid electrolyte is, for example, Li_{2.3}Zr_{0.7}Fe_{0.3}Cl₆. In the disclosure, the halide solid electrolyte does not contain rare earth metals, which can significantly reduce the cost, and the halide solid electrolyte uses iron as a doping element, in which the substitution of Fe³⁺ in the crystal lattice can improve the ionic conductivity of the halide solid electrolyte while further reducing the cost. At the same time, the halide solid electrolyte is coated on the high-voltage lithium nickel manganate positive electrode active material, which can effectively suppress the side reaction between the positive electrode active material and the sulfide electrolyte at a high voltage and the interfacial stability between the electrode and the solid electrolyte is improved, thereby improving the stability and the cycle performance of the battery.

In an embodiment of the disclosure, the positive electrode active material is, for example, in a secondary spherical form or a single crystal form, in which a median particle diameter D50 of the positive electrode active material in the secondary spherical form is 10 µm to 40 µm, and a median particle diameter D50 of the positive electrode active material in the single crystal form is 1 µm to 16 µm. The median particle diameter of the positive electrode active material is controlled to prevent a poor processing performance due to the particle diameter being small and to prevent a poor electrochemical performance due to the particle diameter being large, thereby the processing performance and electrochemical performance of the positive electrode active material are improved at the same time.

In an embodiment of the disclosure, in the positive electrode material, the halide solid electrolyte is uniformly coated on the surface of the positive electrode active material, the distribution of iron atoms on the surface of the positive electrode material is measured by the energy dispersive X-ray spectrometer (EDS) to determine the coating amount and coating uniformity of the halide solid electrolyte. In this embodiment, the molar ratio of iron atoms on the surface of the positive electrode material is, for example, 0.2% to 5%. That is, the halide solid electrolyte has a good compatibility with the high-voltage lithium nickel manganate LiNi_{0.5}Mn_{1.5}O₄. At the same time, by coating the surface of the positive electrode active material with the halide solid electrolyte with a high ion conductivity, the ion transmission dynamics can be effectively improved, thereby improving the rate performance of the battery.

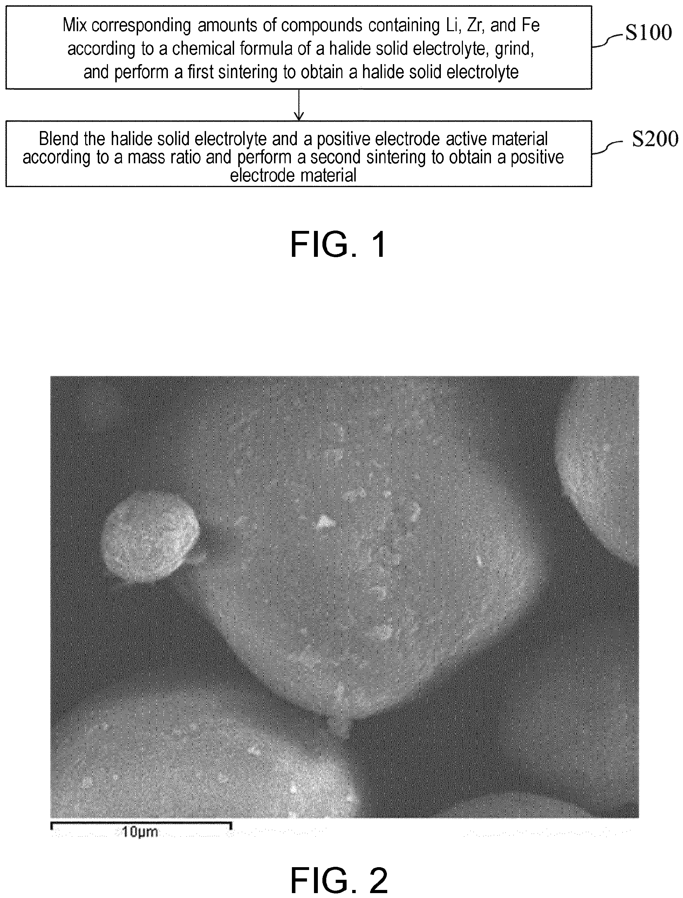

Referring to FIG. 1, the disclosure also proposes a preparation method of a positive electrode active material. The preparation method includes but is not limited to Step S 100 to Step S200.

Step S100: mixing corresponding amounts of compounds comprising Li, Zr, and Fe according to a chemical formula of a halide solid electrolyte, grinding, and performing a first sintering to obtain the halide solid electrolyte.

Step S200: blending the halide solid electrolyte and a positive electrode active material according to a mass ratio and performing a second sintering to obtain a positive electrode material.

Referring to FIG. 1, in an embodiment of the disclosure, in Step S100, according to the chemical formula of the halide solid electrolyte Li₂₊aZr₁₋ₐFeₐCl_{6-x-y}BrₓI_{y}, the corresponding molar amounts of compounds containing Li, Zr, and Fe ions are mixed to form a mixture, and the mixture is ground and first sintered to obtain the halide solid electrolyte. In an embodiment of the disclosure, the chemical formula of the halide solid electrolyte is, for example, Li_{2.3}Zr_{0.7}Fe_{0.3}Cl₆, and the selected raw materials are, for example, LiCl, ZrCl₄, and FeCl₃. In this embodiment, a variety of raw materials are mixed, for example, by a ball mill, so that the raw materials are mixed and contacted uniformly. Also, the rotation speed of the ball mill is, for example, 400 rpm to 700 rpm, or for example, 500 rpm. The mixing time of the ball mill is, for example, 1.5 h to 3 h, or for example, 2 h. The diameter of the zirconium bead of the ball mill is, for example, 8 mm to 15 mm, or for example, 10 mm. The ball-to-material ratio is, for example, (20 to 30): 1, or for example, 30:1.

Referring to FIG. 1, in an embodiment of the disclosure, in Step S100, after the mixture is obtained, the mixture is processed by, for example, a ball milling method, a solid-phase sintering method, or a heating eutectic method, and the mixture is prepared by, for example, grinding and sintering methods. The rotation speed of the grinding is, for example, 900 rpm to 1200 rpm, or for example, 1000 rpm, and the grinding time is, for example, 8 h to 15 h, or for example, 10 h. The ground mixture is first sintered to obtain the halide solid electrolyte. The temperature rise rate of the sintering is, for example, 4 °C/min to 5 °C/min, the temperature of the first sintering is, for example, 250 °C to 350 °C, the sintering time is 3 h to 5 h, the sintering atmosphere is, for example, an inert gas, and the sintering time is the time after the temperature is rised to the temperature of the first sintering. Through the first sintering process, the crystallinity of the halide solid electrolyte can be enhanced. After the sintering is completed, the halide solid electrolyte is cooled by furnace cooling. In the halide solid electrolyte, Fe element is used as the doping element in the disclosure, and the isovalent substitution of Fe³⁺ in the crystal lattice can improve the ionic conductivity of the halide solid electrolyte. In an embodiment of the disclosure, the ionic conductivity of the halide solid electrolyte is greater than or equal to 1 mS/cm.

Referring to FIG. 1, in an embodiment of the disclosure, in Step S200, after the halide solid electrolyte is obtained, the halide solid electrolyte and the positive electrode active material are blended according to a mass ratio. In this embodiment, the mass ratio of the halide solid electrolyte and the positive electrode active material is (0.1 to 1.2): (99.9 to 98.8), or, for example, 0.4: 99.6, 0.6: 99.4, 0.7: 99.3, 0.8: 99.8, or 1: 99. During the blending process, the rotation speed of the mixer is, for example, 100 rpm to 10000 rpm, and the mixing time is, for example, 1 h to 48 h. Then, a second sintering is performed on the mixed halide solid electrolyte and positive electrode active material, in which the temperature rise rate of the sintering is, for example, 1 °C/min to 4 °C/min, the temperature of the second sintering is, for example, 200 °C to 500 °C, the sintering time is, for example, 6 h to 18 h, the sintering atmosphere is, for example, an inert gas, and the sintering time is the time after the temperature is rised to the temperature of the second sintering. In this embodiment, the positive electrode active material is, for example, LiNi_{0.5}Mn_{1.5}O₄, and the positive electrode active material is in the secondary spherical form or in the single crystal form, the D50 of LiNi_{0.5}Mn_{1.5}O₄ in the secondary spherical form is, for example, 5 µm to 40 µm, the D50 of LiNi_{0.5}Mn_{1.5}O₄ in the single crystal form is, for example, 1 µm to 16 µm, the obtained positive electrode material is tested by the energy dispersive X-ray spectrometer and found that the molar ratio of Fe atoms on the surface is 0.2% to 5%. The second sintering helps the halide solid electrolyte and the lithium nickel manganate positive electrode active material to form a good ion transmission interface. Meanwhile, the sintering temperature is controlled to avoid the problem of a poor interface and a low ionic conductivity caused by insufficient compactness of the halide solid electrolyte due to the sintering temperature being low and to avoid the problem of decomposition of part of the halide solid electrolyte due to the sintering temperature being high, thereby a high-quality positive electrode material is obtained.

The disclosure also proposes a lithium-ion battery, which includes a positive electrode, a solid electrolyte, and a negative electrode, in which the solid electrolyte is arranged between the positive electrode and the negative electrode. The solid electrolyte is obtained by, for example, pressing a fast ion conductor into tablets, and, for example, the pressure is maintained for 3 to 8 minutes under a pressure of 0.8 to 1.5 tons. In other embodiments, other preparation methods may also be used to obtain the solid electrolyte. In this embodiment, the fast ion conductor includes, for example, a sulfide fast ion conductor, and the sulfide fast ion conductor is, for example, Li₆PS₅Cl. The positive electrode includes a positive electrode material, a fast ion conductor, and a conductive agent, etc., in which the positive electrode material is the positive electrode material coated with the halide solid electrolyte, and the fast ion conductor is the same as or different from the fast ion conductor in the solid electrolyte. In this embodiment, the fast ion conductor in the positive electrode is, for example, Li₆PS₅Cl, and the conductive agent is, for example, conductive carbon black (Super P, SP), carbon nanotube (CNT), carbon fiber (VGCF), graphene, silver powder, or aluminum powder. In an embodiment of the disclosure, the mass ratio of the positive electrode material, the fast ion conductor, and the conductive agent is, for example, (65 to 89): (10 to 30): (1to 5). The positive electrode material, the fast ion conductor, and the conductive agent are, for example, ground in a mortar for 15 to 30 minutes, and then mixed uniformly to obtain a composite positive electrode powder. The composite positive electrode powder is pressed on the solid electrolyte, and, for example, the pressure is maintained for 3 to 8 minutes under a pressure of 0.8 to 1.5 tons to obtain the positive electrode. The negative electrode is, for example, a metal lithium sheet. The metal lithium sheet is pressed on the side of the solid electrolyte away from the positive electrode, and, for example, the pressure is maintained under a pressure of 0.1 to 0.2 tons to obtain an all-solid-state lithium-ion battery. The assembly process of the all-solid-state lithium-ion battery is completed in a glove box in an atmosphere of argon.

Hereinafter, the disclosure described specifically by referring to examples, and the examples are not intended to limit the disclosure. Appropriate modifications may be made within the scope consistent with the gist of the disclosure and fall within the technical scope of the disclosure.

### Example 1

Li_{2.3}Zr_{0.7}Fe_{0.3}Cl₆ and single crystal LiNi_{0.5}Mn_{1.5}O₄ are placed in a mixer for blending according to a mass ratio of 0.6: 99.4, in which the rotation speed for mixing is 5000 rpm, and the mixing time is 24 h. Afterward, the mixed powder is placed in a muffle furnace for sintering, with a temperature rise rate of 2 °C/min, a sintering temperature of 350 °C, a sintering time of 12 hours, and an atmosphere of argon. After sintering, the positive electrode material of the high-voltage lithium nickel manganate coated with the halide solid electrolyte is obtained by grinding and sieving. The energy dispersive X-ray spectrometer test shows that the molar ratio of Fe atoms on the surface of the positive electrode material is 2.4%.

50 mg of Li₆PS₅Cl is taken, put into the mold, and pressed for 5 minutes under a pressure of 1 ton into a solid electrolyte. The positive electrode material, Li₆PS₅Cl, and conductive carbon black conductive agent are weighted, taken sequentially according to the mass ratio of 70: 29: 1, added to the mortar, and ground by hand for 20 minutes to obtain the composite positive electrode powder. Then, 10 mg of the composite positive electrode powder is placed on the solid electrolyte, the pressure is hold for 5 minutes under a pressure of 1 ton to form the positive electrode. The solid electrolyte is turned over after being taken out, a metal lithium sheet is paced on the side of the solid electrolyte relative to the positive electrode, the diameter of the metal lithium sheet is 10 mm, the pressure is added to 0.1 tons and the pressure is held, then an all-solid-state lithium-ion battery is obtained. The assembly process of the all-solid-state lithium-ion battery is completed in a glove box in an atmosphere of argon.

### Example 2

Li_{2.3}Zr_{0.7}Fe_{0.3}Cl₆ and polycrystalline LiNi_{0.5}Mn_{1.5}O₄ are placed in a mixer for blending according to a mass ratio of 0.6: 99.4, in which the rotation speed for mixing is 5000 rpm, and the mixing time is 24 h. Afterward, the mixed powder is placed in a muffle furnace for sintering, with a temperature rise rate of 2°C/min, a sintering temperature of 350°C, a sintering time of 12 hours, and an atmosphere of argon. After sintering, the positive electrode material of the high-voltage lithium nickel manganate coated with the halide solid electrolyte is obtained by grinding and sieving. The energy dispersive X-ray spectrometer test shows that the molar ratio of Fe atoms on the surface of the positive electrode material is 2.2%.

50 mg of Li₆PS₅Cl is taken, put into the mold, and pressed for 5 minutes under a pressure of 1 ton into a solid electrolyte. The positive electrode material, Li₆PS₅Cl, and conductive carbon black conductive agent are weighted, taken sequentially according to the mass ratio of 70: 29: 1, added to the mortar, and ground by hand for 20 minutes to obtain the composite positive electrode powder. Then, 10 mg of the composite positive electrode powder is placed on the solid electrolyte, the pressure is hold for 5 minutes under a pressure of 1 ton to form the positive electrode. The solid electrolyte is turned over after being taken out, a metal lithium sheet is paced on the side of the solid electrolyte relative to the positive electrode, the diameter of the metal lithium sheet is 10 mm, the pressure is added to 0.1 tons and the pressure is held, then an all solid-state lithium-ion battery is obtained. The assembly process of the all solid-state lithium-ion battery is completed in a glove box in an atmosphere of argon.

### Example 3

The mass ratio of Li_{2.3}Zr_{0.7}Fe_{0.3}Cl₆ and single crystal LiNi_{0.5}Mn_{1.5}O₄ is 0.1: 99.9, and other operations are consistent with Example 1.

### Example 4

The mass ratio of Li_{2.3}Zr_{0.7}Fe_{0.3}Cl₆ and polycrystalline LiNi_{0.5}Mn_{1.5}O₄ is 0.1: 99.9, and other operations are consistent with Example 2.

### Example 5

The mass ratio of Li_{2.3}Zr_{0.7}Fe_{0.3}Cl₆ and single crystal LiNi_{0.5}Mn_{1.5}O₄ is 1.2: 98.8, and other operations are consistent with Example 1.

### Example 6

The mass ratio of Li_{2.3}Zr_{0.7}Fe_{0.3}Cl₆ and polycrystalline LiNi_{0.5}Mn_{1.5}O₄ is 1.2: 98.8, and other operations are consistent with Example 2.

### Comparative Example 1

The energy dispersive X-ray spectrometer test of uncoated single crystal LiNi_{0.5}Mn_{1.5}O₄ shows that the molar ratio of Fe atoms on the surface is 0%. 50 mg of LiePSsCl is taken, put into the mold, and pressed for 5 minutes under a pressure of 1 ton into a solid electrolyte. LiNi_{0.5}Mn_{1.5}O₄, Li₆PS₅Cl, and conductive carbon black conductive agent are weighted, taken sequentially according to the mass ratio of 70: 29: 1, added to the mortar, and ground by hand for 20 minutes to obtain the composite positive electrode powder. Then, 10 mg of the composite positive electrode powder is placed on the solid electrolyte, the pressure is hold for 5 minutes under a pressure of 1 ton to form the positive electrode. The solid electrolyte is turned over after being taken out, a metal lithium sheet is paced on the side of the solid electrolyte relative to the positive electrode, the diameter of the metal lithium sheet is 10 mm, the pressure is added to 0.1 tons and the pressure is held, then an all-solid-state lithium-ion battery is obtained. The assembly process of the all-solid-state lithium-ion battery is completed in a glove box in an atmosphere of argon.

### Comparative Example 2

The energy dispersive X-ray spectrometer test of uncoated polycrystalline LiNi_{0.5}Mn_{1.5}O₄ shows that the molar ratio of Fe atoms on the surface is 0%. 50 mg of LiePSsCl is taken, put into the mold, and pressed for 5 minutes under a pressure of 1 ton into a solid electrolyte. LiNi_{0.5}Mn_{1.5}O₄, Li₆PS₅Cl, and conductive carbon black conductive agent are weighted, taken sequentially according to the mass ratio of 70: 29: 1, added to the mortar, and ground by hand for 20 minutes to obtain the composite positive electrode powder. Then, 10 mg of the composite positive electrode powder is placed on the solid electrolyte, the pressure is hold for 5 minutes under a pressure of 1 ton to form the positive electrode. The solid electrolyte is turned over after being taken out, a metal lithium sheet is paced on the side of the solid electrolyte relative to the positive electrode, the diameter of the metal lithium sheet is 10 mm, the pressure is added to 0.1 tons and the pressure is held, then an all-solid-state lithium-ion battery is obtained. The assembly process of the all-solid-state lithium-ion battery is completed in a glove box in an atmosphere of argon.

### Comparative Example 3

The mass ratio of Li_{2.3}Zr_{0.7}Fe_{0.3}Cl₆ and single crystal LiNi_{0.5}Mn_{1.5}O₄ is 0.05: 99.95, and other operations are consistent with Example 1.

### Comparative Example 4

The mass ratio of Li_{2.3}Zr_{0.7}Fe_{0.3}Cl₆ and polycrystalline LiNi_{0.5}Mn_{1.5}O₄ is 0.05: 99.95, and other operations are consistent with Example 2.

### Comparative Example 5

The mass ratio of Li_{2.3}Zr_{0.7}Fe_{0.3}Cl₆ and single crystal LiNi_{0.5}Mn_{1.5}O₄ is 10: 90, and other operations are consistent with Example 1.

### Comparative Example 6

The mass ratio of Li_{2.3}Zr_{0.7}Fe_{0.3}Cl₆ and polycrystalline LiNi_{0.5}Mn_{1.5}O₄ is 10: 90, and other operations are consistent with Example 2.

In Examples 1 to 6 and Comparative Examples 1 to 6 of the disclosure, different positive electrode materials are used to prepare lithium-ion batteries. In an environment of 25 °C, the LAND electrochemical workstation is used to test the all-solid-state lithium-ion batteries prepared as above according to standard methods to test the gram capacity and the initial Coulombic efficiency, the voltage range is 3.2 to 4.95 V, and the test rate is 0.1 C.

**Table 1. Performance Test Results of Lithium-ion Batteries in Examples 1 to 6 and Comparative Examples 1 to 6**

| Group | Molar ratio of Fe atoms on the surface | Gram capacity | Initial Coulombic efficiency |
|---|---|---|---|
| Example 1 | 2.4% | 130.2 | 80% |
| Example 2 | 2.2% | 134.5 | 82% |
| Example 3 | 0.3% | 121.6 | 73% |
| Example 4 | 0.2% | 120.1 | 70% |
| Example 5 | 4.8% | 120.4 | 85% |
| Example 6 | 4.5% | 122.7 | 86% |
| Comparative Example 1 | 0% | 52.5 | 34% |
| Comparative Example 2 | 0% | 58.1 | 35% |
| Comparative Example 3 | 0.1% | 52.2 | 34% |
| Comparative Example 4 | 0.1% | 59.2 | 36% |
| Comparative Example 5 | 9.9% | 85.2 | 79% |
| Comparative Example 6 | 9.7% | 86.0 | 79% |

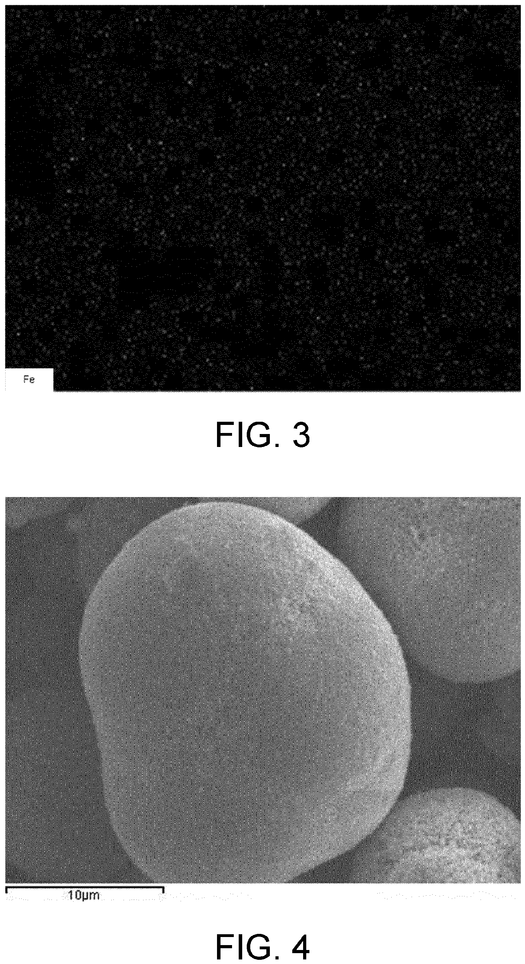

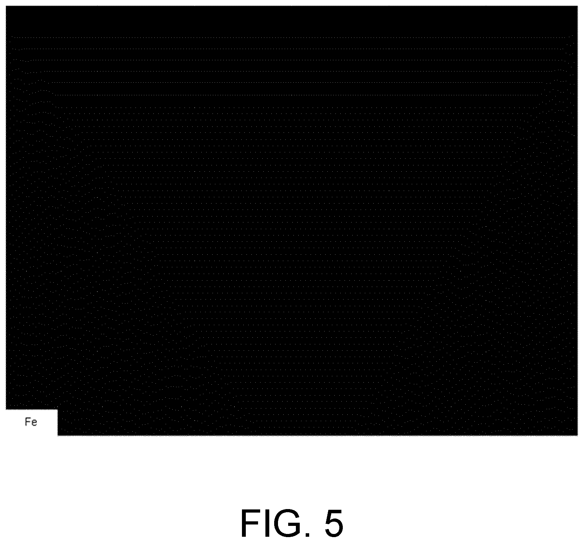

Referring to FIG. 2 to FIG. 5, the scanning electron microscope (SEM) image and the EDS energy spectrum diagram of the coated positive electrode material prepared in Example 2 are shown in FIG. 2 and FIG. 3. As may be seen from FIG. 2 and FIG. 3, after being coated with the halide solid electrolyte, a layer of coating material containing Fe element appears on the surface, and the surface of the material is not damaged. The scanning electron microscope image and the EDS energy spectrum diagram of the untreated positive electrode active material in Comparative Example 2 are shown in FIG. 4 and FIG. 5. As may be seen from FIG. 4 and FIG. 5, the surfaces of the uncoated lithium nickel manganate particles are smooth and do not contain Fe element. Therefore, in the disclosure, the halide solid electrolyte can be uniformly coated on the lithium nickel manganate particles without affecting the morphology of the lithium nickel manganate particles.

As shown in Table 1, comparing Examples 1 to 6 and Comparative Examples 1 to 2, by coating with the halide solid electrolyte, the gram capacity of the lithium-ion battery can be increased, and the Coulombic efficiency is improved. That is, the halide solid electrolyte has a good compatibility with the high-voltage lithium nickel manganate particles, which can effectively improve the ion transmission dynamics, thereby improving the rate performance of the battery. Coating the high-voltage lithium nickel manganate positive electrode material with the halide solid electrolyte can effectively suppress the side reaction between the positive electrode material and the sulfide electrolyte at a high voltage and the interfacial stability between the positive electrode and the solid electrolyte is improved, thereby improving the stability and the cycle performance of the lithium-ion battery.

As shown in Table 1, comparing Examples 1 to 6 and Comparative Examples 3 to 6, as the molar ratio of Fe atoms on the surface of the positive electrode material increases, the coating of the halide solid electrolyte increases, and the gram capacity and the Coulombic efficiency of the lithium-ion battery increases. Also, when the coating amount is low, the side reaction increases, and oxygen release from the positive electrode increases, resulting in a decrease in the initial Coulombic efficiency. When the coating amount is high, side reactions is reduced, oxygen release from the positive electrode is reduced, the initial Coulombic efficiency increases, but the electron conductivity becomes poor and the polarization increases, thereby the capacity is reduced. This shows that the halide solid electrolyte can have a high ionic conductivity and a high-voltage resistance, which can improve the lithium ion conductivity of the composite positive electrode. Also, controlling the coating amount of the halide solid electrolyte on the surface of the positive electrode active material can simultaneously improve the capacity and the cycle performance of the lithium-ion battery.

The disclosure further provides an electronic device. The electronic device includes at least one of the lithium ion batteries, and the lithium-ion battery is used to provide electric energy. The electronic device may be a vehicle, a mobile phone, a portable device, a laptop, a ship, a space vehicle, an electric toy, an electric tool, etc. In an embodiment of the disclosure, the vehicle may a new energy vehicle, and the new energy vehicle may be a pure electric vehicle, a hybrid vehicle, or a range-extended vehicle, etc. The space vehicle includes an aircraft, a rocket, a space shuttle, a spacecraft, etc. The electric toy includes a fixed or mobile electric toy, such as a game console, an electric car toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and a planer. The electronic device includes the lithium-ion battery and therefore includes the advantages of the lithium-ion battery, which will not be repeated here.

In summary, the disclosure proposes the positive electrode material, the preparation method thereof, and the applications. By coating the positive electrode active material with the halide solid electrolyte, in which the halide solid electrolyte includes iron element doping, the halide solid electrolyte with a low cost, a high ionic conductivity, and a high-voltage resistance is obtained, and the problem of interfacial instability between the high-voltage lithium nickel manganate positive electrode active material and the sulfide solid electrolyte is solved. The lithium ion conductivity of the positive electrode material can be improved while the side reaction between the positive electrode material and the sulfide electrolyte at a high voltage can be effectively suppressed. The halide solid electrolyte has a good compatibility with the high-voltage lithium nickel manganate positive electrode active material, which can effectively improve the ion transmission dynamics, thereby improving the rate performance of the battery. The side reaction between the positive electrode material and the sulfide electrolyte at a high-voltage can be effectively suppressed and the interfacial stability between the electrode and the solid electrolyte is improved, thereby improving the stability and the cycle performance of the battery.

## Claims

1. A positive electrode material, at least comprising:
a positive electrode active material comprising LiNi_{0.5}Mn_{1.5}O₄; and
a coating layer coated on the positive electrode active material, wherein the coating layer comprises a halide solid electrolyte, and a chemical formula of the halide solid electrolyte is Li₂₊ₐZr₁₋ₐFeₐCl_{6-x-y}BrₓI_{y}, wherein 0 < a≤0.5; x=0 to 6, y=0 to 6, x+y≤6.

2. The positive electrode material of claim 1, wherein a molar ratio of iron atoms on a surface of the positive electrode material measured by an energy dispersive X-ray spectrometer is 0.2% to 5%.

3. The positive electrode material of claim 1, wherein a chemical formula of the halide solid electrolyte is Li_{2.3}Zr_{0.7}Fe_{0.3}Cl₆.

4. The positive electrode material of claim 1, wherein the positive electrode active material is in a secondary spherical form or a single crystal form.

5. The positive electrode material of claim 4, wherein a median particle diameter D50 of the positive electrode active material in the secondary spherical form is 10 µm to 40 µm.

6. The positive electrode material of claim 4, wherein a median particle diameter D50 of the positive electrode active material in the single crystal form is 1 µm to 16 µm.

7. A preparation method for a positive electrode material, at least comprising:
mixing corresponding amounts of compounds comprising Li, Zr, and Fe according to a chemical formula of a halide solid electrolyte, grinding, and performing a first sintering to obtain the halide solid electrolyte (S100); and
blending the halide solid electrolyte and a positive electrode active material according to a mass ratio and performing a second sintering to obtain a positive electrode material (S200).

8. The preparation method for the positive electrode material of claim 7, wherein the mass ratio of the halide solid electrolyte and the positive electrode active material is (0.1 to 1.2): (99.9 to 98.8).

9. The preparation method for the positive electrode material of claim 7, wherein conditions for the blending comprises: a mixing speed of 100 rpm to 10000 rpm, and a mixing time of 1 h to 48 h.

10. The preparation method for the positive electrode material of claim 7, wherein for the first sintering, a temperature is 250 °C to 350 °C, and a sintering time is 3 h to 5 h.

11. The preparation method for the positive electrode material of claim 7, wherein for the second sintering, a temperature is 200 °C to 500 °C, and a sintering time is 6 h to 18 h.

12. A lithium-ion battery comprises the positive electrode material of claim 1.

13. An electronic device comprises the lithium-ion battery of claim 12.

## Amended claims

### Amended claims in accordance with Rule 137(2) EPC.

1. A positive electrode material, at least comprising:
a positive electrode active material comprising LiNi_{0.5}Mn_{1.5}O₄; and
a coating layer coated on the positive electrode active material, wherein the coating layer comprises a halide solid electrolyte, and a chemical formula of the halide solid electrolyte is Li₂₊ₐZr₁₋ₐFeₐCl_{6-x-y}BrₓI_{y}, wherein 0<a≤0.5; x=0 to 6, y=0 to 6, x+y≤6,
wherein a molar ratio of iron atoms on a surface of the positive electrode material measured by an energy dispersive X-ray spectrometer is 0.2% to 5%.

2. The positive electrode material of claim 1, wherein a chemical formula of the halide solid electrolyte is Li_{2.3}Zr_{0.7}Fe_{0.3}Cl₆.

3. The positive electrode material of claim 1, wherein the positive electrode active material is in a secondary spherical form or a single crystal form.

4. A preparation method for a positive electrode material, at least comprising:
mixing corresponding amounts of compounds comprising Li, Zr, and Fe according to a chemical formula of a halide solid electrolyte, grinding, and performing a first sintering to obtain the halide solid electrolyte (S100); and
blending the halide solid electrolyte and a positive electrode active material according to a mass ratio and performing a second sintering to obtain a positive electrode material (S200),
wherein, in the positive electrode material, a molar ratio of iron atoms on a surface of the positive electrode material measured by an energy dispersive X-ray spectrometer is 0.2% to 5%.

5. The preparation method for the positive electrode material of claim 4, wherein the mass ratio of the halide solid electrolyte and the positive electrode active material is (0.1 to 1.2): (99.9 to 98.8).

6. The preparation method for the positive electrode material of claim 4, wherein conditions for the blending comprises: a mixing speed of 100 rpm to 10000 rpm, and a mixing time of 1 h to 48 h.

7. The preparation method for the positive electrode material of claim 4, wherein for the first sintering, a temperature is 250 °C to 350 °C, and a sintering time is 3 h to 5 h.

8. The preparation method for the positive electrode material of claim 4, wherein for the second sintering, a temperature is 200 °C to 500 °C, and a sintering time is 6 h to 18 h.

9. A lithium-ion battery comprises the positive electrode material of claim 1.

10. An electronic device comprises the lithium-ion battery of claim 9.
